# EUROPÄISCHE PATENTSCHRIFT

(11) **EP 3 047 002 B1**
(45) Veröffentlichungstag und Bekanntmachung des Hinweises auf die Patenterteilung: **14.02.2018**
(21) Anmeldenummer: 14786591.9
(22) Anmeldetag: 17.09.2014
(51) Int. Cl.: C10M 169/04, C10M 173/00, F01K 25/06

(54) **BETRIEBSMITTEL FÜR EINEN DAMPFKREISPROZESS**
WORKING FLUID FOR A STEAM CYCLE ENGINE
LIQUIDE DE CHAUFFAGE POUR UN PROCÉDÉ CIRCUIT FERMÉ DE VAPEUR

(30) Priorität: 17.09.2013 DE 102013110256
(43) Veröffentlichungstag der Anmeldung: 27.07.2016
(73) Patentinhaber: Fuchs Petrolub SE, 68169 Mannheim (DE)
(72) Erfinder: BRAUN, Jürgen, 67346 Speyer (DE); EBERT, Dennis, 68723 Oftersheim (DE)
(74) Vertreter: Müller Schupfner & Partner Patent- und Rechtsanwaltspartnerschaft mbB
(86) Internationale Anmeldenummer: PCT/DE2014/100336
(87) Internationale Veröffentlichungsnummer: WO 2015/039649

(56) Entgegenhaltungen:
- DE-A1- 2 215 868
- DE-A1-102006 052 906
- DE-A1-102008 005 036
- US-A1- 2008 289 662
- US-B1- 6 653 355
- RONALD L SHUBKIN: "Polyalphaolefins", CRC HANDBOOK OF LUBRICATION AND TRIBOLOGY: THEORY OF TRIBOLOGY,, 1. Januar 1993 (1993-01-01), Seiten 219-236, XP009108705,

## Beschreibung

Die Erfindung betrifft ein Betriebsmittel für einen Dampfkreisprozess umfassend ein Arbeitsmedium, ein Schmiermittel und einen Emulgator. Das Arbeitsmedium ist ein C1- bis C4- Alkohol und/oder ein C3- bis C4- Keton, ggf. in Mischung mit Wasser, eine Vorrichtung für einen Dampfkreisprozess enthaltend das Betriebsmittel und die Verwendung des Betriebsmittels in einem organischen Rankine-Zyklus. Das Schmiermittel ist ein Kohlenwasserstoff und der Emulgator ist eine oberflächenaktive Substanz.

Der organische Rankine-Zyklus, kurz "ORC", ist ein Dampfkreisprozess, bei dem als Arbeitsmedium nicht Wasserdampf, sondern organische Flüssigkeiten eingesetzt werden. Im Unterschied zu herkömmlichen Dampfkreisprozessen ist der Prozess nicht an Druck und Temperatur gebunden, wie sie sich aus dem Dampfdruck von Wasser ergeben. Durch die Verwendung von organischen Flüssigkeiten mit einem niedrigeren Siedepunkt als Wasser können Druck und Temperatur unter den Werten, wie sie in Wasserdampfkraftwerken herrschen, eingestellt werden. Das Verfahren kommt vor allem dann zum Einsatz, wenn das zur Verfügung stehende Temperaturgefälle zwischen Wärmequelle zur Verdampfung und Wärmesenke zur Kondensation niedrig sein soll oder insgesamt niedrige Arbeitstemperaturen gewünscht sind.

Der Dampfkreisprozess umfasst zumindest einen Verdampfer, eine Expansionsmaschine, einen Kondensator und eine Kreislaufpumpe. Der Expander ist nach einer Ausgestaltung ein Verdichter, der invers betrieben wird, wie ein Scroll-Verdichter, Hubkolbenverdichter, eine Radialkolbenmaschine oder eine Turbine. Es wird mechanische Energie dadurch gewonnen, dass das Arbeitsmedium im Verdampfer durch Zufuhr von Wärme von außen erhitzt und verdampft wird. Durch die Expansion des Dampfes wird ein Expander betrieben und mechanische Energie erzeugt. Nachfolgend wird das Arbeitsmedium im Kondensator abgekühlt, verflüssigt und mittels einer Kreislaufpumpe wieder dem Verdampfer zugeführt. Damit ist der Kreislauf geschlossen. Die mechanische Energie kann z.B. mit einem Generator in elektrische Energie umgewandelt werden oder direkt mechanisch dem Antriebstrang wieder zugeführt werden.

Das Arbeitsmedium wird in einem geschlossenen Kreislauf geführt. Der Kreislauf umfasst bewegliche Teile und bedarf einer Schmierung. Daher werden Betriebsmittel eingesetzt, die das Arbeitsmedium und ein Schmiermittel umfassen. Die Verwendung von Betriebsmittel umfassend ein Arbeitsmedium und ein Schmiermittel im Dampfkreisprozess ist bekannt.

Nach der US 3603087 wird z.B. Wasser als Arbeitsmedium mit einem organischen Schmiermittel wie Glykol, Polypropylenglykol, Ether oder Polyglykolether, wobei das Schmiermittel in dem Arbeitsmedium vollständig lösbar ist, eingesetzt. Die Löslichkeit des Schmiermittels im Arbeitsmedium verursacht einen Viskositätsanstieg des Arbeitsmediums. Die DE 102008005036 A1 beschreibt eine Vorrichtung zur Abwärmenutzung mittels eines ORC-Prozesses als Teil einer Verbrennungskraftmaschine mit Wärmerückgewinnung. Als Arbeitsmedium wird eine Lösung aus Wasser mit Methanol und/oder Ethanol vorgeschlagen. Aus der DE 2215868 A ist ein Verfahren zum Betreiben einer nach dem Clausius-Rankine-Prozeß betriebenen Kraft-Erzeuger-Anlage bekannt, bei der als Arbeitsmedium Trifluorethanol und Wasser und ein Schmiermittel verwendet werden. Das Schmiermittel ist bevorzugt ein nicht mit dem Arbeitsmedium mischbarer Kohlenwasserstoff. Aus DE 102006052906 A1 ist ein Dampfkreisprozess bekannt, der im Verdampfer auch bei Temperaturen oberhalb von 170 °C betrieben werden kann. Das verwendete Arbeitsmedium umfasst einen C1- bis C4-Alkohol. Das Arbeitsmedium kann mit einem Schmiermittel versetzt sein, das geeigneter Weise eine Kondensationstemperatur oberhalb der Dampfaustrittstemperatur aufweist, so dass das Schmiermittel mit verdampft wird und im Expander als erstes kondensiert.

Die EP 0292526 B1 und die JP 2011-063780 offenbaren emulgatorhaltige Emulsionen, wobei die eine Phase ein Wasser/Alkohol-Gemisch ist und die andere Phase schweres wachshaltiges Öl oder Rohöl beinhaltet. Die Anwendungen sind jeweils andere.

Aufgrund des geschlossenen Kreislaufs ist es erforderlich, dass das Schmiermittel hohe Anforderungen im Hinblick auf eine Alterungsbeständigkeit erfüllt. Die vorliegende Erfindung hat es sich daher zur Aufgabe gemacht, Betriebsmittel zur Verfügung zu stellen, die eine besonders geeignete Kombination von Arbeitsmedium und Schmiermittel umfassen, wobei das Schmiermittel thermisch stabil sein soll und mit dem Arbeitsmedium des Kreislaufes weitestgehend nicht mischbar ist, um eine ausreichende Schmierung des Expanders sicherzustellen.

Ausgehend von dem vorbeschriebenen Stand der Technik liegt der vorliegenden Erfindung die Aufgabe zugrunde, eine Zusammensetzung eines Betriebsmittels aus Arbeitsmedium, Schmiermittel und Emulgator bereitzustellen, das thermisch stabil und langzeitbeständig ist und geeignet zum Betrieb eines organischen Rankine-Zyklus, der die Abwärme eines Verbrennungsmotors nutzt. Wird der ORC in Verbindung mit einem Verbrennungsmotor eingesetzt, so stellen die hohen Temperaturen aus dem Abgasstrom große Anforderungen an die thermische Stabilität des Arbeitsmedium-Schmierstoff-Gemischs. Der ORC soll in thermisch hochbelasteten Anlagen wie einem Wärmetauscher im Abgasstrang eines Kraftfahrzeugs mit einer Verbrennungskraftmaschine langlebig einsetzbar sein.

Eine Expansionsmaschine benötigt für den Betrieb einen Schmierstoff, der zusammen mit dem Arbeitsmedium gleichmäßig durch den ORC Kreislauf transportiert wird und eine ausreichend hohe thermische und chemische Stabilität besitzt.

Obige Aufgaben werden durch eine Zusammensetzung mit den Merkmalen des unabhängigen Anspruchs 1 gelöst. Bevorzugte Ausführungsformen sind Gegenstand der Unteransprüche oder nachfolgend beschrieben.

Die Zusammensetzung ist Betriebsmittel für einen Dampfkreisprozess umfassend ein Arbeitsmedium (a), ein Schmiermittel (b) und einen Emulgator (c) und andere fakultative Komponenten (d). Die anderen fakultativen Komponenten fallen nicht unter (a), (b) oder (c) und werden dem Betriebsmittel zugerechnet unabhängig davon, ob diese gleichzeitig auch Arbeitsmedium oder Teil des Arbeitsmediums sind oder sein könnten.

Vorzugsweise besteht das Betriebsmittel ausschließlich aus dem Arbeitsmedium (a), dem Schmiermittel (b) und dem/den Emulgator(en) (c) und der/den fakultativen Komponente(n) (d), in den nachfolgend angegebenen Anteilen, bezogen auf das Betriebsmittel, d.h. die Anteile von (a), (b), (c) und (d) addieren sich zu 100 Gew.%.

Das Arbeitsmedium (a) besteht, bezogen auf die Gesamtzusammensetzung des Arbeitsmediums, aus
(a.1) zumindest einem C1- bis C4-Alkohol, oder
(a.2) zumindest einem C3- bis C4- Keton oder
   Mischungen von (a.1) und (a.2) und
(a.3) fakultativ bis zu 75 Gew.% Wasser, vorzugsweise bis zu 50 Gew.% Wasser.
Der Anteil der Komponenten (a.1) bis (a.3) am Arbeitsmedium berechnet sich am Beispiel des Wassers (a.3) in Gew.% ausgeführt wie folgt: = (a.3) / ((a.1) + (a.2) +(a.3)) * 100). In die Berechnung gehen abschließend nur die Komponenten (a.1), (a.2) und (a.3) ein.

Der Anteil des Arbeitsmediums (a) am Betriebsmittel beträgt vorzugsweise 99 bis 60 Gew.%, besonders bevorzugt 95 bis 75 Gew.% und insbesondere bevorzugt 90 bis 80 Gew.%.

Nach einer Ausgestaltung der Erfindung ist kein Wasser im Arbeitsmedium enthalten und nach einer anderen Ausgestaltung ist z.B. 5 bis 75 Gew.% Wasser, insbesondere 10 bis 50 Gew.% Wasser, im Arbeitsmedium enthalten. Das Arbeitsmedium besteht im Übrigen dann entweder nur aus Komponente (a.1), nur aus Komponente (a.2) oder nur aus einem Gemisch von Komponente (a.1) und Komponente (a.2).

In dem C1- bis C4- Alkohol bezeichnen C1 bis C4 jeweils einen Kohlenwasserstoffrest mit 1 bis 4 Kohlenstoffatomen, insbesondere Alkylreste, wie z.B. insbesondere Methanol, Ethanol, Propanol oder Butanol und deren Stellungsisomere oder deren Mischungen. In dem C3- bis C4- Keton bezeichnen C3 und C4 jeweils einen Kohlenwasserstoffrest mit 3 oder 4 Kohlenstoffatomen wie z.B. Aceton oder Methylethylketon oder deren Mischungen.

Das Schmiermittel (b) besteht aus Kohlenwasserstoffen und weist eine Viskosität (kinematische Viskosität) von 40 bis 700 mm²/s bei 40°C, vorzugsweise 100 bis 400 mm²/s bei 40°C, besonders bevorzugt 150 bis 300 mm²/s bei 40°C auf (gemessen nach DIN EN ISO 3104).

Der Siedepunkt des Schmiermittels, auch bezogen auf ein etwaiges Kohlenwasserstoff-Gemisch, beträgt vorzugsweise größer 300°C (gaschromatographisch bestimmt nach DIN 51435).

Geeignete Schmiermittel sind z.B. Alkylate, alkylierte Naphthaline, Mineralöle oder Poly-alpha-Olefine (PAO).

Besonders bevorzugt sind PAO und deren Mischungen, z.B. Kombinationen von niedrigviskosem PAO wie PAO 4, PAO 6, PAO 8 oder PAO 10 (mit jeweils ca. 4, 6, 8 u. 10 mm²/s bei 100°C gemessen nach DIN EN ISO 3104) und hochviskosem PAO wie PAO 40, mPAO 40, PAO 100, mPAO 100 (mit jeweils ca. 40 bzw. 100 mm²/s bei 100°C gemessen nach DIN EN ISO 3104) oder anderen verfügbaren PAO Qualitäten im Viskositätsbereich zwischen ca. 20 und 200 mm²/s bei 100°C gemessen nach DIN EN ISO 3104, wobei m für durch Metallocen-Katalyse polymerisierte PAOs steht. Besonders bevorzugt sind Mischungen von insbesondere durch Metallocen-Katalyse polymerisierten PAOs aus Polymerisaten von 2 bis 12 C8-C20 alpha-Olefin-Einheiten.

Der Anteil des Schmiermittels (b) am Betriebsmittel beträgt 1 bis 40 Gew.%, besonders bevorzugt 5 bis 25 Gew.% und insbesondere bevorzugt 10 bis 20 Gew.%.

Das Schmiermittel ist mit dem Arbeitsmedium nicht löslich. Nicht-löslich bedeutet hierbei mit Anteilen von kleiner 5 Gew.%, vorzugsweise kleiner 2 Gew.%, bei 25°C. Im Ergebnis erfolgt somit keine nennenswerte Verdünnung des Schmiermittels und daher nur ein geringer Abfall der Viskosität durch das Einlösen.

Schmiermittel wie Ester sind auf Grund ihrer thermischen Instabilität bzw. Reaktivität ungeeignet, auch deshalb, weil mit Alkoholen bei den im vorliegenden Prozess auftretenden Temperaturen Reaktionen zwischen Ester und Alkohol stattfinden.

Der eingesetzte Emulgator (c) wird insbesondere unter den Mitgliedern der folgenden Gruppen ausgewählt
- Alkenylsuccinimide, vorzugsweise mit Molekulargewichten von 500 bis 10000 g/mol, besonders bevorzugt 500 bis 2500 g/mol (Zahlenmittel);
- Alkenylsuccinamide, vorzugsweise mit Molekulargewichten von 500 bis 10000 g/mol, besonders bevorzugt 500 bis 2500 g/mol (Zahlenmittel);
- C8- bis C24 -, vorzugsweise C10- bis C18- Fettalkoholethercarbonsäuren mit 2 bis 10, besonders bevorzugt 4 bis 8, Alkoxylateinheiten, insbesondere bevorzugt Ethylenoxid- und/oder Propylenoxid-Einheiten (bevorzugt nur Ethylenoxid), und deren Salze, insbesondere deren Ammoniumsalze, einschließlich Alkanolammoniumsalze (mit z.B. einem C1- bis C4- Alkanol-Rest);
- Alkoxylierte C10- bis C24-, vorzugsweise C8- bis C24 -, besonders bevorzugt C10- bis C18- Fettalkohole mit 2 bis 10, insbesondere 4 bis 8, Alkoxylateinheiten, insbesondere bevorzugt Ethylenoxid- und/oder Propylenoxid-Einheiten (bevorzugt nur Ethylenoxid);
- Alkoxylierte Alkylphenole, insbesondere alkoxylierte C6- bis C18- Alkylphenole, besonders bevorzugt C8- bis C12-Alkylphenole, jeweils mit 2 bis 10, insbesondere 4 bis 8, Alkoxylateinheiten, insbesondere bevorzugt Ethylenoxid- und/oder Propylenoxid-Einheiten (bevorzugt nur Ethylenoxid), beispielsweise Octyl- oder Nonylphenolethoxylat (4-8 EO);
sowie deren Mischungen.

Der Emulgator wird bei der Herstellung des Betriebsmittels vorzugsweise zusammen mit dem Schmiermittel zugegeben, z.B. indem er mit diesem homogenisiert wird.

Bei Verwendung von Alkoholen als Bestandteil des Arbeitsmediums oder als Arbeitsmedium sind als Emulgatoren vorgenannte Alkenylsuccinimide und Alkenylsuccinamide, vorzugsweise Polyisobutenylsuccimid, und vorgenannte alkoxylierte Fettalkohole bevorzugt.

Der Anteil der Emulgatoren beträgt 0,01 bis 5 Gew.%, bezogen auf das Schmiermittel. Der Anteil der Emulgatoren beträgt in der Summe vorzugsweise größer 0,0001 bis 2 Gew.%, bezogen auf das Betriebsmittel. Vorzugsweise gelten beide Bedingungen kumulativ.

Der Anteil der fakultativen Komponenten (d) beträgt vorzugsweise größer 0,0001 Gew.%, insbesondere bevorzugt 0,0005 bis 2 Gew.%., bezogen jeweils auf das Betriebsmittel, und unabhängig hiervon, vorzugsweise jedoch kumulativ, größer 0,01 Gew.%, insbesondere bevorzugt 0,1 bis 5 Gew.% bezogen auf das Schmiermittel.

Geeignete fakultative Komponenten sind beispielsweise Verschleißschutzmittel, EP-Additive, Antioxidantien, Buntmetallinhibitoren und Entschäumer.

Als Verschleißschutzmittel (anti-wear) und EP-Additive (extreme pressure), nachfolgend kurz AW/EP-Additiv genannt, sind Phosphor oder Schwefel und Phosphor oder Schwefel enthaltende Verbindungen geeignet. Geeignet sind beispielsweise Tricresylphosphat, Tri(nonylphenyl) phosphit, Dioleyl hydrogenphosphite, 2-Ethylhexyldiphenyl-Phosphit, Di-/Triarylphosphate mono-, di- oder trisubstituiert an zumindest einem Arylring mit t-Butyl- und/oder Isobutyl-Resten sowie Vertreter der Substanzklasse der Dithiophosphorsäureester. Neben phoshor- und Phosphor-Schwefel-haltigen Hochdruck-Additiven sind weiterhin rein schwefelhaltige AW/EP-Additive einsetzbar.

Die AW/EP-Additive können einzeln oder in Kombination eingesetzt werden. Der Anteil der AW/EP-Additive beträgt vorzugsweise größer 0,0001 Gew.%, insbesondere bevorzugt 0,005 bis 2 Gew.%. bezogen jeweils auf das Betriebsmittel und unabhängig hiervon, vorzugsweise jedoch kumulativ, größer 0,01 Gew.%, insbesondere bevorzugt 0,1 bis 5 Gew.% bezogen auf das Schmiermittel.

Als Antioxidantien sind beispielsweise einsetzbar phenolische Antioxidantien wie 2,6-Di-tert-butyl-4-methylphenol, 2,6-Di-tert-butyl-4-ethylphenol und 2,2'-Methylenbis(4-methyl-6-tert-butylphenol) und Antioxidantien vom Amintyp, wie Phenyl-alpha-naphthylamin, N, N'-Diphenyl-p-phenylendiamin und alkylierte Diphenylamine (Alkyl = C4-C9). Besonders bevorzugt sind phenolische Antioxidantien.

Der Anteil der Antioxidantien beträgt in der Summe vorzugsweise größer gleich 0,0001 Gew.%, insbesondere 0,0001 bis 0,4 Gew.%. bezogen jeweils auf das Betriebsmittel und unabhängig hiervon, vorzugsweise jedoch kumulativ, größer 0,01 Gew.%, und insbesondere bevorzugt 0,01 bis 1 Gew.% bezogen auf das Schmiermittel.

Als Buntmetallinhibitoren können Triazole eingesetzt werden, vorzugsweise aus Thiadiazole, Benzotriazole und Tolyltriazole und deren Derivate. Der Anteil der Buntmetallinhibitoren beträgt in der Summe vorzugsweise 0,0001 bis 0,02 Gew.%, bezogen jeweils auf das Betriebsmittel und unabhängig hiervon, vorzugsweise jedoch kumulativ, 0,01 bis 0,5 Gew.% bezogen auf das Schmiermittel.

Ferner können das Betriebsmittel als weitere Komponenten (d) noch Entschäumer enthalten. Als konkrete Zusätze der vorstehend genannten Art sind vorzugsweise Siloxane, Polyethylenglykole und Polymethacrylate zu nennen.

Nach einer Ausgestaltung besteht das Betriebsmittel ausschließlich aus den Komponenten (a) bis (d), wobei die Komponente (d) fakultativ ist.

In dem erfindungsgemäßen Dampfkreisprozess wird zumindest eine verdampfbare organische Flüssigkeit mit einem niedrigeren Siedepunkt als Wasser eingesetzt. Der Kreisprozess umfasst zumindest einen Verdampfer, eine Expansionsmaschine, einen Kondensator und eine Kreislaufpumpe. Der Expander ist vorzugsweise ein Verdichter, der invers betrieben wird, wie ein Scroll-Verdichter, Hubkolbenverdichter, eine Radialkolbenmaschine oder eine Turbine. Das System oder der Kreisprozess ist hermetisch nach außen abgeschlossen. Vorzugsweise ist der Dampfkreisprozess Teil eines Kraftfahrzeugs, insbesondere eine Lastkraftwagens, mit Verbrennungsmotor, wobei der Wärmtauscher die Abwärme des Motors nutzt und z.B. in den Abgasstrang des Verbrennungsmotors eingekoppelt ist.

Durch die im Wärmetauscher aus dem Abgasstrom eingebrachte Energie wird das Arbeitsmedium verdampft. Der Wärmetauscher fungiert hier als Verdampfer. Die vom Expander gewonnen mechanische Leistung wird entweder in den Antriebsstrang des Kraftfahrzeuges eingekoppelt oder treibt einen Generator zur Erzeugung elektrischer Energie an.

### Experimenteller Teil

### Emulgiertest

Um die Wirksamkeit der Emulgatoren zu untersuchen, wurden Schmierstoffmischungen mit einer Viskosität bei 40°C von 150 mm²/s aus PAO 8, PAO 40 u. den jeweiligen Emulgatoren hergestellt. Jeweils 20 g dieser Schmierstoffmischungen wurden mit 20 g Arbeitsmedium in ein 50 ml Reagenzglas mit Schraubverschluss gefüllt, verschlossen und bei 20°C ca. 1 Minute per Hand geschüttelt. Im Anschluss wurde das Reagenzglas auf einem Reagenzglasrüttler bei einer Frequenz von 2200 Hz nochmals für 1 Minute durchmischt.

1 Minute nach Abschalten des Reagenzglasrüttlers wurde das Phasenverhalten der Mischung als Maß für die Emulgierwirkung qualitativ nach folgendem Schema bewertet:
0 = keine Emulgierwirkung
1 = minimale Emulgierwirkung
2 = gute Emulgierwirkung
3 = sehr gute Emulgierwirkung

Tabelle 1 enthält eine Aufstellung der verwendeten Emulgatoren, die Tabellen 2 bis 6 zeigen die Ergebnisse der Emulgierversuche jeweiliger Schmierstoffmischungen mit verschiedenen Arbeitsmedien.

**Tabelle 1**

| **Emulgator** | **Produktbezeichnung** | **Hersteller** | **Chemie** |
|---|---|---|---|
| Emulgator 1 | Hitec 633 | Afton Chemicals | Polyisobutensuccinamid, nicht-boriert |
| Emulgator 2 | C 9231 | Infineum | Polyisobutensuccinimid, boriert |
| Emulgator 3 | Marlipal O13/80 | Sasol | Iso-Tridecanol, ethoxyliert |
| Emulgator 4 | Marlipal 24/60 | Sasol | C10/C12- Alkohole, ethoxyliert |
| Emulgator 5 | Emulsogen M | Clariant | C16- bis C18-Alkoholethoxylat (5 EO) |

**Tabelle 2**

| Emulgierwirkung mit Ethanol (=100 Gew.% des Arbeitsmediums) | | |
|---|---|---|
| Formulierung | [Gew:%] | Emulgierwirkung |
| PAO 8 | 40,0 | |
| PAO 40 | 58,0 | 3 |
| Emulgator 1 | 2,0 | |
| PAO 8 | 40,0 | |
| PAO 40 | 59,5 | 2 |
| Emulgator 1 | 0,5 | |
| PAO 8 | 40,0 | |
| PAO 40 | 59,0 | 3 |
| Emulgator 2 | 1,0 | |
| PAO 8 | 40,0 | |
| PAO 40 | 59,0 | 2 |
| Emulgator 3 | 1,0 | |
| PAO 8 | 40,0 | |
| PAO 40 | 59,0 | 2 |
| Emulgator 4 | 1,0 | |

**Tabelle 3**

| Emulgierwirkung mit Aceton (=100 Gew.% des Arbeitsmediums) | | |
|---|---|---|
| Formulierung | [%] | Emulgierwirkung |
| PAO 8 | 40,0 | |
| PAO 40 | 58,0 | 2 |
| Emulgator 1 | 2,0 | |

**Tabelle 4**

| Emulgierwirkung mit Ethanol/Wasser | | |
|---|---|---|
| 50 Gew.% Ethanol und 50 Gew.% Wasser | | |
| Formulierung | [%] | Emulgierwirkung |
| PAO 8 | 40,0 | |
| PAO 40 | 58,0 | 3 |
| Emulgator 1 | 2,0 | |
| PAO 8 | 40,0 | |
| PAO 40 | 59,0 | 3 |
| Emulgator 2 | 1,0 | |
| PAO 8 | 40,0 | |
| PAO 40 | 59,0 | 2 |
| Emulgator 3 | 1,0 | |
| PAO 8 | 40,0 | |
| PAO 40 | 59,0 | 2 |
| Emulgator 5 | 1,0 | |

**Tabelle 5**

| Emulgierwirkung mit Aceton/Wasser | | |
|---|---|---|
| 50 Gew.% Aceton und 50 Gew.% Wasser | | |
| Formulierung | [%] | Emulgierwirkung |
| PAO 8 | 40,0 | |
| PAO 40 | 58,0 | 3 |
| Emulgator 1 | 2,0 | |
| PAO 8 | 40,0 | |
| PAO 40 | 59,0 | 2 |
| Emulgator 2 | 1,0 | |
| PAO 8 | 40,0 | |
| PAO 40 | 59,0 | 2 |
| Emulgator 3 | 1,0 | |
| PAO 8 | 40,0 | |
| PAO 40 | 59,0 | 3 |
| Emulgator 5 | 1,0 | |

**Tabelle 6**

| Emulgierwirkung mit Ethanol/Aceton | | |
|---|---|---|
| 50 Gew.% Ethanol und 50 Gew.% Aceton | | |
| Formulierung | [%] | Emulgierwirkung |
| PAO 8 | 40,0 | |
| PAO 40 | 58,0 | 3 |
| Emulgator 1 | 2,0 | |
| PAO 8 | 40,0 | |
| PAO 40 | 59,0 | 2 |
| Emulgator 2 | 1,0 | |
| PAO 8 | 40,0 | |
| PAO 40 | 59,0 | 2 |
| Emulgator 3 | 1,0 | |

### Autoklaventest zur Bestimmung der thermischen Stabilität

In einen Druckautoklaven mit einem Fassungsvolumen von 300 ml wurden jeweils Mischungen aus 60 Gramm (40 Gew.%) Schmierstoff und 90 Gramm (60 Gew.%) Arbeitsmedium eingefüllt. Als Schmierstoff wurden neben Schmierstoffmischungen auf Basis PAO mit einer Viskosität bei 40°C von 150 mm²/s auch 2 Mineralölvarianten untersucht. Zum Entfernen der überstehenden Atmosphäre, insbesondere zur Entfernung des Sauerstoffs, wurde der Autoklav 30 Sekunden lang bei einem Druck von 500 mbar evakuiert und nachfolgend unter magnetisch induziertem Rühren mit einem Rührfisch auf 250 °C erhitzt.

Nach 28 Tagen bei 250°C wurde der Versuch beendet. Nach Abkühlen des Autoklaven auf 20°C wurde der Inhalt in einen Scheidetrichter überführt. Nach einer Ruhezeit von 2 Stunden wurden die wieder getrennten Phasen separiert und Schmierstoff und Arbeitsmedium einzeln auf Versäuerung hin untersucht. Die Säurezahlen wurden nach DIN ISO 6618 bestimmt. Die Tabellen 7 bis 9 zeigen die Ergebnisse der Autoklavenversuche.

**Tabelle 7**

| Autoklaventest mit Ethanol | | | |
|---|---|---|---|
| Schmierstoff | [%] | Neutralisationszahl [mg KOH/g] | |
| | | Schmierstoff | Arbeitsmedium |
| PAO 8 | 40,0 | 0,01 | 0,04 |
| PAO 40 | 60,0 | | |
| PAO 8 | 40,0 | | |
| PAO 40 | 59,8 | 0,01 | 0,02 |
| Emulgator 2 | 0,2 | | |
| PAO 8 | 40,0 | | |
| PAO 40 | 58,0 | 0,01 | 0,06 |
| Emulgator 2 | 2,0 | | |
| SN 900 F (H+R, V40 ∼ 210 mm²/s) | 99,8 | 0,02 | 0,04 |
| Emulgator 1 | 0,2 | | |
| SN 600 (AP/E Core 600, Exxon Mobil) | 76,0 | 0,01 | 0,02 |
| Brightstock (AP/E Core 2500 Exxon Mobil) | 23,8 | | |
| Emulgator 1 | 0,2 | | |

**Tabelle 8**

| Autoklaventest mit Ethanol/Wasser | | | |
|---|---|---|---|
| 50 Gew.% Ethanol und 50 Gew.% Wasser | | | |
| Schmierstoff | [%] | Neutralisationszahl [mg KOH/g] | |
| | | Schmierstoff | Arbeitsmedium |
| PAO 8 | 40,0 | 0,01 | 0,04 |
| PAO 40 | 60,0 | | |

**Tabelle 9**

| Autoklaventest mit Aceton | | | |
|---|---|---|---|
| Schmierstoff | [%] | Neutralisationszahl [mg KOH/g] | |
| | | Schmierstoff | Arbeitsmedium |
| PAO 8 | 40,0 | | |
| PAO 40 | 58,0 | 0,02 | 0,05 |
| Emulgator 2 | 2,0 | | |

## Patentansprüche

1. Betriebsmittel-Zusammensetzung umfassend
(a) zumindest ein Arbeitsmedium bestehend aus
(a.1) zumindest einem C1- bis C4- Alkohol, oder
(a.2) zumindest einem C3- bis C4- Keton oder
Mischungen von (a.1) und (a.2) und
(a.3) fakultativ bis zu 75 Gew.% Wasser, vorzugsweise bis zu 50 Gew.% Wasser, bezogen auf das Arbeitsmedium;
(b) zumindest ein Schmiermittel bestehend aus Kohlenwasserstoffen, wobei das Schmiermittel eine Viskosität von 40 bis 700 mm²/s bei 40°C (kinematische Viskosität, gemessen nach DIN EN ISO 3104) aufweist; und
(c) zumindest einen Emulgator (c),
wobei der Anteil des Schmiermittels (b) an der Betriebsmittel-Zusammensetzung 1 bis 40 Gew.% beträgt und
der Anteil des zumindest einen Emulgators in der Summe 0,01 bis 5 Gew.%, bezogen auf das zumindest eine Schmiermittel, beträgt.

2. Betriebsmittel-Zusammensetzung nach Anspruch 1, wobei der Anteil des Arbeitsmediums (a) am Betriebsmittel 99 bis 60 Gew.%, vorzugsweise 95 bis 75 Gew.%, vorzugsweise bevorzugt 90 bis 80 Gew.% beträgt.

3. Betriebsmittel-Zusammensetzung nach Anspruch 1 oder 2, wobei das Schmiermittel (b) bestehend aus Kohlenwasserstoffen eine Viskosität von 100 bis 400 mm²/s bei 40°C, vorzugsweise 150 bis 300 mm²/s bei 40°C aufweist.

4. Betriebsmittel-Zusammensetzung nach zumindest einem der vorhergehenden Ansprüche, wobei das Schmiermittel (b) bestehend aus Kohlenwasserstoffen einen Siedepunkt, auch bezogen auf ein etwaiges Kohlenwasserstoff-Gemisch, von größer 300°C aufweist (gaschromatographisch bestimmt nach DIN 51435).

5. Betriebsmittel-Zusammensetzung nach zumindest einem der vorhergehenden Ansprüche, wobei das Schmiermittel ein Alkylat, ein alkyliertes Naphthalin, ein Mineralöl, ein Poly-alpha-Olefin (PAO) oder deren Mischungen ist.

6. Betriebsmittel-Zusammensetzung nach zumindest einem der vorhergehenden Ansprüche, wobei das Schmiermittel ein PAO und deren Mischungen ist vorzugsweise Kombinationen von niedrigviskosem PAOs mit jeweils einer Viskosität von 4 bis 10 mm²/s bei 100°C und hochviskosem PAOs mit jeweils einer Viskosität von 40 bis 100 mm²/s bei 100°C gemessen jeweils nach DIN EN ISO 3104.

7. Betriebsmittel-Zusammensetzung nach zumindest einem der vorhergehenden Ansprüche, wobei der Anteil des Schmiermittels (b) an der Betriebsmittel-Zusammensetzung 5 bis 25 Gew.%, bevorzugt 10 bis 20 Gew.%, beträgt.

8. Betriebsmittel-Zusammensetzung nach zumindest einem der vorhergehenden Ansprüche, wobei das Schmiermittel in dem Arbeitsmedium zu kleiner 5 Gew.%, vorzugsweise zu kleiner 2 Gew.% bei 25°C löslich ist.

9. Betriebsmittel-Zusammensetzung nach zumindest einem der vorhergehenden Ansprüche, wobei der Emulgator ausgewählt ist aus der Gruppe:
• ein oder mehrere Alkenylsuccinimide, vorzugsweise mit Molekulargewichten von 500 bis 10000 g/mol, besonders bevorzugt 500 bis 2500 g/mol (Zahlenmittel);
• ein oder mehrere Alkenylsuccinamide, vorzugsweise mit Molekulargewichten von 500 bis 10000 g/mol, besonders bevorzugt 500 bis 2500 g/mol (Zahlenmittel);
• eine oder mehrere C8- bis C24 -, vorzugsweise C10- bis C18- Fettalkoholethercarbonsäuren mit 2 bis 10, vorzugsweise 4 bis 8, Alkoxylateinheiten, insbesondere bevorzugt Ethylenoxid- und/oder Propylenoxid-Einheiten, und deren Salze, vorzugsweise Ammoniumsalze;
• eine oder mehrere alkoxylierte C10- bis C24-, vorzugsweise C8- bis C24 - und insbesondere bevorzugt C10- bis C18- Fettalkohole mit 2 bis 10, vorzugsweise 4 bis 8, Alkoxylateinheiten, insbesondere bevorzugt Ethylenoxid- und/oder Propylenoxid-Einheiten;
• eine oder mehrere alkoxylierte Alkylphenole, insbesondere C6- bis C18-Alkyl, mit 2 bis 10, insbesondere 4 bis 8, Alkoxylateinheiten, insbesondere bevorzugt Ethylenoxid- und/oder Propylenoxid-Einheiten;
sowie deren Mischungen.

10. Betriebsmittel-Zusammensetzung nach Anspruch 9, wobei der Anteil der Emulgatoren in der Summe größer 0,0001 bis 2 Gew.%, bezogen auf die Betriebsmittel-Zusammensetzung, beträgt.

11. Betriebsmittel-Zusammensetzung nach zumindest einem der vorhergehenden Ansprüche, wobei die Betriebsmittel-Zusammensetzung als weitere fakultative Komponenten (d) enthalten Verschleißschutzmittel, EP-Additive, Antioxidantien, Buntmetallinhibitoren, Entschäumer oder deren Mischungen.

12. Betriebsmittel-Zusammensetzung nach Anspruch 11, wobei der Anteil der fakultativen weiteren Komponenten (d) zusammen größer 0,0001 Gew.% beträgt, vorzugsweise 0,0005 bis 2 Gew.%., bezogen jeweils auf die Betriebsmittel-Zusammensetzung, und unabhängig hiervon, vorzugsweise jedoch kumulativ, größer 0,01 Gew.%, insbesondere bevorzugt 0,1 bis 5 Gew.% bezogen auf das Schmiermittel.

13. Betriebsmittel-Zusammensetzung nach zumindest einem der vorhergehenden Ansprüche, wobei die Betriebsmittel--Zusammensetzung 5 bis 75 Gew.% Wasser, insbesondere 10 bis 50 Gew.% Wasser, im Arbeitsmedium enthält.

14. Vorrichtung für einen Dampfkreisprozess umfassend zumindest einen Verdampfer, eine Expansionsmaschine, einen Kondensator und eine Kreislaufpumpe und die Betriebsmittel-Zusammensetzung nach zumindest einem der Ansprüche 1 bis 13.

15. Vorrichtung nach Anspruch 14, wobei der Dampfkreisprozess Teil eines Kraftfahrzeugs mit Verbrennungsmotor ist, und ein Wärmtauscher die Abwärme des Motors nutzt und vorzugsweise in den Abgasstrang des Verbrennungsmotors eingekoppelt ist und der Wärmetauscher als Verdampfer fungiert.

16. Vorrichtung nach Anspruch 14 oder 15, wobei die vom Expander gewonnene mechanische Leistung entweder in den Antriebsstrang des Kraftfahrzeuges eingekoppelt wird oder einen Generator zur Erzeugung elektrischer Energie antreibt.

17. Verwendung der Betriebsmittel-Zusammensetzung nach zumindest einem der Ansprüche 1 bis 13 in einem organischen Rankine-Zyklus.

## Claims

1. Working fluid composition comprising
(a) at least one working medium consisting of
(a.1) at least one C1 to C4 alcohol, or
(a.2) at least one C3 to C4 ketone or
mixtures of (a1) and (a2) and
(a.3) optionally up to 75% by weight of water, preferably up to 50% by weight of water, based on the working medium; and
(b) at least one lubricant consisting of hydrocarbons, wherein the lubricant has a viscosity of 40 to 700 mm²/s at 40°C (kinematic viscosity, measured according to DIN EN ISO 3104); and
(c) at least one emulsifier (c),
wherein the proportion of the lubricant (b) on the working fluid composition is 1 to 40% by weight and
the proportion of the at least one emulsifier is in total 0. 01 to 5% by weight, based on the at least one lubricant.

2. Working fluid composition according to claim 1, wherein the proportion of the working medium (a) on the working fluid is 99 to 60% by weight, preferably 95 to 75% by weight, preferably preferred from 90 to 80% by weight.

3. Working fluid composition according to claim 1 or 2, wherein the lubricant (b) consisting of hydrocarbons has a viscosity of 100 to 400 mm²/s at 40°C, preferably 150 to 300 mm²/s at 40°C.

4. Working fluid composition according to at least one of the preceding claims, wherein the lubricant (b) consisting of hydrocarbons has a boiling point, also based on an optionally present hydrocarbon mixture, of greater than 300°C (determined by gas chromatography according to DIN 51435).

5. Working fluid composition according to at least one of the preceding claims, wherein the lubricant is an alkylate, an alkylated naphthalene, a mineral oil, a poly-alpha-olefin (PAO) or their mixtures.

6. Working fluid composition according to at least one of the preceding claims, wherein the lubricant is a PAO, and their mixtures, preferably combinations of low viscosity PAOs with each having a viscosity of 4 to 10 mm²/s at 100°C and high viscosity PAOs, with each having a viscosity of 40 to 100 mm²/s at 100°C measured in each case according to DIN EN ISO 3104.

7. Working fluid composition according to at least one of the preceding claims, wherein the proportion of lubricant (b) on the working fluid composition is 5 to 25% by weight, preferably 10 to 20% by weight.

8. Working fluid composition according to at least one of the preceding claims, wherein the lubricant is soluble to less than 5% by weight, preferably less than 2% by weight at 25°C within the working medium.

9. Working fluid composition according to at least one of the preceding claims, wherein the emulsifier is selected from the group of:
• one or more alkenyl succinimides, preferably with molecular weights of 500 to 10000 g/mol, particularly preferably 500 to 2500 g/mol (number average);
• one or more alkenyl succinamides, preferably with molecular weights of 500 to 10000 g/mol, particularly preferably 500 to 2500 g/mol (number average);
• one or more C8 to C24, preferably C10 to C18 fatty alcohol ether carboxylic acids with 2 to 10, preferably 4 to 8, alkoxylate units, particularly preferably ethylene oxide and/or propylene oxide units, and their salts, preferably ammonium salts;
• one or more alkoxylated C10 to C24, preferably C8 to C24 and particularly preferably C10 to C18 fatty alcohols with 2 to 10, preferably 4 to 8, alkoxylate units, particularly preferably ethylene oxide and/or propylene oxide units;
• one or more alkoxylated alkylphenols, in particular C6 to C18 alkyl, with 2 to 10, in particular 4 to 8, alkoxylate units, particularly preferably ethylene oxide and/or propylene oxide units;
and mixtures thereof.

10. Working fluid composition according to claim 9, wherein the proportion of the emulsifiers is in total greater than 0.0001 to 2% by weight, based on the working fluid composition.

11. Working fluid composition according to at least one of the preceding claims, wherein the working fluid composition as other optional components (d) contain antiwear agents, extreme pressure additives, antioxidants, nonferrous metal inhibitors, defoamers, or their mixtures.

12. Working fluid composition according to claim 11, wherein the proportion of the optional further components (d) together is greater than 0.0001% by weight, preferably 0.0005 to 2% by weight, in each case based on the working fluid composition, and independently, but preferably cumulatively, greater than 0.01% by weight, particularly preferably 0.1 to 5% by weight based on the lubricant.

13. Working fluid composition according to at least one of the preceding claims, wherein the working fluid composition contains 5 to 75% by weight water, particularly 10 to 50% by weight water within the working medium.

14. Device for a steam cycle process at least comprising an evaporator, an expander, a condenser and a circulation pump, and the working fluid composition according to at least one of the claims 1 to 13.

15. Device according to claim 14, wherein the steam cycle process is part of a motor vehicle with an internal combustion engine, and a heat exchanger uses the waste heat of the engine and is preferably coupled to the exhaust gas system of the engine and the heat exchanger acts as an evaporator.

16. Device according to claims 14 or 15, wherein the mechanical power recovered by the expander is either coupled to the drive train of the motor vehicle, or drives a generator for generating electrical energy.

17. Use of the working fluid composition according to at least one of claims 1 to 13 in an organic Rankine cycle.

## Revendications

1. Composition de fluide de fonctionnement comportant :
(a) au moins un milieu de travail se composant de :
(a.1) au moins un alcool en C₁ à C₄, ou
(a.2) au moins une cétone en C₃ à C₄ ou des mélanges de (a.1) et (a.2) ; et
(a.3) facultativement jusqu'à 75 % en poids d'eau, de préférence jusqu'à 50 % en poids d'eau, par rapport au milieu de travail ;
(b) au moins un lubrifiant se composant d'hydrocarbures, le lubrifiant présentant une viscosité de 40 à 700 mm²/s à 40°C (viscosité cinématique, mesurée selon DIN EN ISO 3104) ; et
(c) au moins un émulsifiant (c),
la proportion du lubrifiant (b) dans la composition de fluide de fonctionnement s'élevant à 1 à 40 % en poids ; et la proportion dudit au moins un émulsifiant s'élevant au total à 0,01 à 5 % en poids, par rapport audit au moins un lubrifiant.

2. Composition de fluide de fonctionnement selon la revendication 1, dans laquelle la proportion du milieu de travail (a) dans le fluide de fonctionnement s'élève à 99 à 60 % en poids, de préférence à 95 à 75 % en poids, de façon particulièrement préférée à 90 à 80 % en poids.

3. Composition de fluide de fonctionnement selon l'une des revendications 1 ou 2, dans laquelle le lubrifiant (b) se composant d'hydrocarbures présente une viscosité de 100 à 400 mm²/s à 40°C, de préférence de 150 à 300 mm²/s à 40°C.

4. Composition de fluide de fonctionnement selon au moins l'une des revendications précédentes, dans laquelle le lubrifiant (b) se composant d'hydrocarbures présente un point d'ébullition, également par rapport à un mélange d'hydrocarbures éventuel, de plus de 300°C (déterminé par chromatographie en phase gazeuse selon DIN 51435).

5. Composition de fluide de fonctionnement selon au moins l'une des revendications précédentes, dans laquelle le lubrifiant est un alkylate, un naphtalène alkylé, une huile minérale, une poly-alpha-oléfine (PAO) ou leurs mélanges.

6. Composition de fluide de fonctionnement selon au moins l'une des revendications précédentes, dans laquelle le lubrifiant est une PAO et un mélange de PAO, de préférence des combinaisons de PAO de faible viscosité ayant chacune une viscosité de 4 à 10 mm²/s à 100°C et de PAO de viscosité élevée ayant chacune une viscosité de 40 à 100 mm²/s à 100°C, mesurée dans chaque cas selon DIN EN ISO 3104.

7. Composition de fluide de fonctionnement selon au moins l'une des revendications précédentes, dans laquelle la proportion du lubrifiant (b) dans la composition de fluide de fonctionnement s'élève à 5 à 25 % en poids, de préférence à 10 à 20 % en poids.

8. Composition de fluide de fonctionnement selon au moins l'une des revendications précédentes, dans laquelle le lubrifiant est soluble à moins de 5 % en poids, de préférence à moins de 2 % en poids à 25°C dans le milieu de travail.

9. Composition de fluide de fonctionnement selon au moins l'une des revendications précédentes, dans laquelle l'émulsifiant est choisi dans le groupe :
• un ou plusieurs alcénylsuccinimides, de préférence ayant des masses moléculaires de 500 à 10 000 g/mol, de façon particulièrement préférée de 500 à 2 500 g/mol (moyenne en nombre) ;
• un ou plusieurs alcénylsuccinamides, de préférence ayant des masses moléculaires de 500 à 10 000 g/mol, de façon particulièrement préférée de 500 à 2 500 g/mol (moyenne en nombre) ;
• un ou plusieurs (alcool gras en C₈ à C₂₄, de préférence en C₁₀ à C₁₈) éther acides carboxyliques, ayant 2 à 10, de préférence 4 à 8, unités alcoxylate, de façon particulièrement préférée unités oxyde d'éthylène et/ou oxyde de propylène, et leurs sels, de préférence les sels d'ammonium ;
• un ou plusieurs alcools gras en C₁₀ à C₂₄, de préférence en C₈ à C₂₄ et de façon particulièrement préférée en C₁₀ à C₁₈, alcoxylés, ayant 2 à 10, de préférence 4 à 8, unités alcoxylate, de façon particulièrement préférée unités oxyde d'éthylène et/ou oxyde de propylène ;
• un ou plusieurs alkylphénols alcoxylés, en particulier alkyl en C₆ à C₁₈, ayant 2 à 10, en particulier 4 à 8, unités alcoxylate, de façon particulièrement préférée unités oxyde d'éthylène et/ou oxyde de propylène ;
ainsi que leurs mélanges.

10. Composition de fluide de fonctionnement selon la revendication 9, dans laquelle la proportion des émulsifiants s'élève au total à plus de 0,0001 à 2 % en poids, sur la base de la composition de fluide de fonctionnement.

11. Composition de fluide de fonctionnement selon au moins l'une des revendications précédentes, dans laquelle la composition de fluide de fonctionnement contient comme autres composants facultatifs (d) des agents anti-usure, des additifs pression extrême, des antioxydants, des inhibiteurs de métaux non ferreux, des agents anti-mousse ou leurs mélanges.

12. Composition de fluide de fonctionnement selon la revendication 11, dans laquelle la proportion des autres composants facultatifs (d) conjointement s'élève à plus de 0,0001 % en poids, de préférence à 0,0005 à 2 % en poids, dans chaque cas par rapport à la composition de fluide de fonctionnement, et indépendamment, mais de préférence de façon cumulée, à plus de 0,01 % en poids, de façon particulièrement préférée à 0,1 à 5 % en poids par rapport au lubrifiant.

13. Composition de fluide de fonctionnement selon au moins l'une des revendications précédentes, dans laquelle la composition de fluide de fonctionnement contient 5 à 75 % en poids d'eau, en particulier 10 à 50 % en poids d'eau, dans le milieu de travail.

14. Dispositif pour un processus à circuit de vapeur comportant au moins un évaporateur, une machine à expansion, un condenseur et une pompe à circulation et la composition de fluide de fonctionnement selon au moins l'une des revendications 1 à 13.

15. Dispositif selon la revendication 14, dans lequel le processus à circuit de vapeur fait partie d'un véhicule à moteur ayant un moteur à combustion interne, et un échangeur de chaleur utilise la chaleur perdue du moteur et, de préférence, est couplé dans le train d'entraînement du moteur à combustion interne et l'échangeur de chaleur agit comme un évaporateur.

16. Dispositif selon l'une des revendications 14 ou 15, dans lequel la puissance mécanique récupérée par la machine à expansion soit est couplée dans le train d'entraînement du véhicule à moteur, soit entraîne un générateur pour la génération d'une énergie électrique.

17. Utilisation de la composition de fluide de fonctionnement selon au moins l'une des revendications 1 à 13 dans un cycle de Rankine organique.
